# EUROPÄISCHE PATENTSCHRIFT

(11) **EP 0 341 404 B1**
(45) Veröffentlichungstag und Bekanntmachung des Hinweises auf die Patenterteilung: **02.02.1994**
(21) Anmeldenummer: 89105187.2
(22) Anmeldetag: 23.03.1989
(51) Int. Cl.: F16D 66/02

(54) **Vorrichtung zum Messen und Anzeigen des Verschleisses von Bremsbelägen**
Brake-pad wear measurement and indicating device
Dispositif pour mesurer et indiquer l'usure de garnitures de freins

(30) Priorität: 10.05.1988 DE 3815994
(43) Veröffentlichungstag der Anmeldung: 15.11.1989
(73) Patentinhaber: DAIMLER-BENZ AKTIENGESELLSCHAFT, 70327 Stuttgart (DE)
(72) Erfinder: Maass, Manfred, D-7300 Esslingen (DE); Klein, Bodo, D-7302 Ostfildern (DE)

(56) Entgegenhaltungen:
- DE-A- 2 114 259
- DE-A- 2 523 229
- DE-C- 739 016

## Beschreibung

Die Erfindung betrifft eine Vorrichtung zum Messen und Anzeigen des Verschleißes von Bremsbelägen, insbesondere bei Fahrzeugen mit Trommel- oder Scheibenbremsen, nach dem Oberbegriff des einzigen Anspruchs (DE-A-25 23 229).

Bei dieser bekannten Vorrichtung ist die Stellung der Belagträger in Bezug auf Bremstrommel oder Bremsscheibe mittels Schiebewiderständen feststellbar und der Widerstandswert als Maß für die Belagstärke anzeigbar. Der Schiebewiderstand ist zwischen einem Punkt an einem festen Bremsträger und einem Punkt an einem beweglichen Belagträger oder zwischen den Belagträgern von sich gegeneinander bewegenden Bremsbelägen angeordnet.

Der Schiebewiderstand wird bei jeder Betätigung der Bremsen bewegt und muß deshalb eine hohe Güte, d.h. hohe Verschleiß- bzw. Abriebfestigkeit der Widerstandsbahnen aufweisen. Eine Anzeige der Belagstärke ist nur während der Betätigung der Bremsen möglich und die Einstellung des Schiebewiderstandes bzw. dessen Justierung muß am fertig montierten Fahrzeug vorgenommen werden. Bei einer Anwendung an sich gegeneinander bewegenden Bremsbelägen von Scheibenbremsen ist auf diese Weise nur die Summe beider Belagstärken ermittelbar, wobei nicht feststellbar ist, ob z.B. ein Bremsbelag nur halb und der andere bereits ganz abgeschliffen ist.

Demgegenüber ist es Aufgabe der Erfindung, eine derartige Vorrichtung zum Anzeigen des Verschleißes von Bremsbelägen dahingehend zu verbessern, daß der verwendete Schiebewiderstand wesentlich geringer beansprucht wird und deshalb eine geringere Güte erfordert, daß eine Justierung am fertig montierten Belagträger nach dessen Herstellung bzw. vor seinem Einbau vorgenommen werden kann und daß bei jeder Bremsenart die exakte Belagstärke ständig festgestellt und angezeigt werden kann, solange die Stromversorgung der Vorrichtung eingeschaltet ist.

Diese Aufgabe wird erfindungsgemäß durch die im Kennzeichen des Anspruchs angegebenen Merkmale gelöst.

In einem nachfolgend beschriebenen Ausführungsbeispiel der Erfindung sind weitere Einzelheiten und Vorteile der Erfindung anhand einer Zeichnung näher erläutert.

In der Zeichnung zeigen:
- Fig. 1 :: einen Querschnitt,
- Fig. 2 :: einen Kreuzriß und
- Fig. 3 :: einen Grundriß
der erfindungsgemäßen Verschleißanzeige-Vorrichtung.

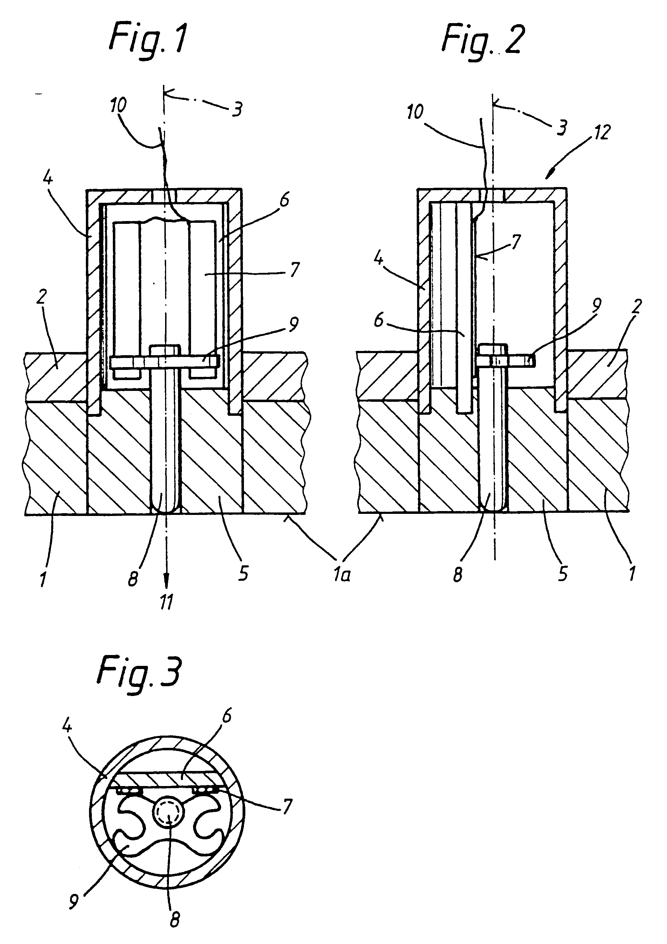

Fig. 1 zeigt einen Querschnitt durch einen Bremsbelag 1, welcher an einem Belagträger 2 befestigt, in der Regel aufgenietet ist.
Durch den Bremsbelag 1 und den Belagträger 2 ist ein Loch gebohrt, dessen Achse 3 strichpunktiert dargestellt ist, deren unteres Ende in einen Pfeil 11 mündet, welcher andeutet, in welche Richtung der Bremsbelag 1 beim Betätigen der Bremse gegen eine nicht gezeichnete Bremsscheibe bewegt wird. In dem Bohrloch befindet sich die eigentliche Vorrichtung, die aus einem in diesem Ausführungsbeispiel zweiteiligen Gehäuse aus einer Schutzkappe 4 und einer Führungshülse 5 besteht, in welchem der Schiebewiderstand geschützt untergebracht ist.

Der Schiebewiderstand besteht aus einer Platine 6, auf welcher parallel zur Achse 3 zwei Widerstandsbahnen 7 angeordnet sind, die an einem Ende miteinander elektrisch verbunden sind. An diese Verbindung ist ein durch die Schutzkappe 4 nach außen führender Anschlußdraht 10 angelötet. Die Platine 6 besteht aus einem hitzebeständigen, elektrisch isolierenden Material, alle übrigen Einzelteile mit Ausnahme der beiden Widerstandsbahnen 7 bestehen aus einem elektrisch leitenden Material, d.h., aus Metall. Aus diesem Grund ist wichtig, daß die Widerstandsbahnen 7 weder mit der Führungshülse 5 noch mit der Schutzkappe 4 in Berührung kommen.

In der Führungshülse 5 befindet sich eine Bohrung, in welcher ein Stift 8 in Richtung der Achse 3 beweglich gelagert ist, dessen in der Zeichnung unteres Ende gehärtet bzw. abriebfest behandelt ist und dessen oberes Ende mit einer Ringnut versehen ist, in welche eine Feder 9 eingeclipst und/oder mit dem Stift 8 fest verbunden ist. Die Feder 9 weist eine im wesentlichen kreuzförmige Gestalt mit gebogenen, federnden Enden auf, von denen sich zwei an der Innenwand der Schutzkappe 4 und die beiden anderen auf den Widerstandsbahnen 7 abstützen. Stift 8 und Feder 9 bilden den Potentiometerabgriff bzw. Schleifer, wobei die Feder 9 zugleich den Stift 8 zentriert und seine Beweglichkeit hemmt.

An einer Widerstandsbahn 7 oder der elektrischen Verbindung beider Bahnen ist ein isolierter Anschlußdraht 10 angelötet und durch eine in der Schutzkappe 4 befindliche Justieröffnung 12 aus dem Gehäuse herausgeführt und mit einer nicht dargestellten Anzeigeeinrichtung verbunden. Der andere Anschluß wird durch die Verbindung Feder 9 - Stift 8 oder Schutzkappe 4 - Belagträger 2 - Fahrzeugmasse gebildet.

Die Justierung des Schiebepotentiometers erfolgt nach der Montage des Gehäuses am Bremsbelag bzw. Belagträger, indem der Bremsbelag mit seiner Abriebfläche 1a auf eine ebene Platte gelegt wird und der Schieber - Stift 8 - durch die Justieröffnung 12 auf diese Platte gedrückt wird, so daß sein unteres Ende in der Ebene der Abriebfläche 1a liegt.

Bei der dargestellten Schaltung sind beide Widerstandsbahnen parallel geschaltet und ist der Widerstandswert bei maximaler Belagstärke, also in neuem Zustand, am größten, bei abgefahrenem Bremsbelag minimal oder "Null". Selbstverständlich ist es ohne weiteres möglich, beide Widerstandsbahnen 7 auch in Reihe zu schalten und damit den zu überstreichenden Widerstandsbereich zu vergrößern.

Mit fortschreitendem Abrieb des Bremsbelages wird der Stift 8 immer weiter ins Gehäuse gedrückt, wobei die Führungshülse 5 mit verschleißt, und auf diese Weise der wirksame Widerstand des Schiebepotentiometers verringert.

Während der 'Lebensdauer' des Bremsbelages wird der Schleifer des Schiebepotentiometers nur ein einziges Mal über die Widerstandsbahnen geführt. Der jeweilige Widerstandswert ist ständig abgreifbar und damit die Belagstärke dauernd anzeigbar. Der Abgleich des Potentiometers ist vor Einbau in das Fahrzeug einfach durchführbar.

Um unterschiedlichen Verschleiß an verschiedenen Stellen zu messen bzw. anzuzeigen, ist der Einsatz mehrerer dieser Potentiometer denkbar. Bei linearem Verlauf der Widerstandsbahnen oder nach Umrechnung ist die Belagstärke auch direkt anzeigbar.

Die vorstehend beschriebene Vorrichtung ist nicht nur auf Bremsbeläge anwendbar, sondern überall, wo von Verschleiß betroffene Beläge überwacht werden sollen oder deren Stärke gemessen werden soll, beispielsweise auch Kupplungsbeläge.

## Patentansprüche

1. Vorrichtung zum Messen und Anzeigen des Verschleißes von Bremsbelägen insbesondere bei Fahrzeugen mit Trommel- oder Scheibenbremsen, wobei die in einem Belagträger geführten Bremsbeläge an die Bremsscheibe oder Bremstrommel angelegt werden und wobei die Belagstärke mittels eines Schiebewiderstandes ermittelbar ist,
**dadurch gekennzeichnet,**
- daß der Schiebewiderstand in einem eine Führungshülse (5) aufweisenden Gehäuse (4, 5) untergebracht ist, welches in einer durch Belagträger (2) und Bremsbelag (1) gehenden Bohrung, deren Achse (3) etwa parallel zur Betätigungsrichtung (11) der Bremse verläuft, angeordnet und mit dem Belagträger (2) fest verbunden ist,
- daß in dem Gehäuse (4, 5) wenigstens eine elektrisch isolierte, parallel zur Achse (3) verlaufende Widerstandsbahn (7) angeordnet ist, deren elektrische Anschlüsse (10) an dem der Bremsscheibe bzw. Bremstrommel entgegengesetzten Ende aus dem Gehäuse (4, 5) herausgeführt sind,
- daß in der Führungshülse (5) ein mit seinem einen Ende bündig mit der Abriebfläche des Bremsbelages endender, axial verschiebbarer Schieber (8) angeordnet ist,
der an seinem anderen Ende mit einer Feder (9) verbunden ist, welche die beiden Widerstandsbahnen (7) elektrisch miteinander verbindet und zugleich den Schieber (8) im Gehäuse (4, 5) so festklemmt, daß er nur bei Anpressen des Bremsbelages (1) an die Bremsscheibe oder Bremstrommel von dieser infolge abnehmender Bremsbelagdicke in das Gehäuse (4, 5) hineingedrückt werden kann und dabei den Widerstandswert des Schiebewiderstandes verändert.

## Claims

1. A device to measure and indicate wear on brake linings, in particular in vehicles with drum or disc brakes, whereby the brake linings positioned in a lining holder are applied to the brake disc or brake drum and whereby the thickness of the lining can be measured by means of a sliding resistor,
**characterised in that**,
- the sliding resistor is positioned in a housing (4,5) with a guide bush (5) which is located in a bore which passes through the lining holder (2) and the brake lining (1), the axis (3) of which runs roughly parallel to the direction of actuation (11) of the brake, and is connected rigidly to the lining holder (2),
- the housing (4,5) contains at least one electrically insulated resistor run (7) positioned parallel to the axis (3), the electrical connections (10) of which come out of the housing (4,5) at the end opposite the brake disc or brake drum,
- the guide bush (5) contains an axially sliding pin (8) one end of which ends flush with the abrasion surface of the brake lining and the other end of which is connected to a spring (9) which forms an electrical connection between the two resistor runs (7) and also holds the pin (8) in the housing (4,5) in such a way that it can only be pushed into the housing (4,5) when the brake lining (1) is pressed against the brake disc or brake drum as the thickness of the brake lining decreases and thus changes the resistance value of the sliding resistor.

## Revendications

1. Dispositif pour mesurer et indiquer l'usure de garnitures de frein, notamment dans des véhicules avec freins à tambours ou à disques, les garnitures de frein guidées dans un support étant appliquées contre le disque de frein ou le tambour de frein et l'épaisseur de garniture étant déterminée au moyen d'un rhéostat caractérisé en ce que le rhéostat est logé dans un carter (4,5) comportant un fourreau de guidage (5) et qui est disposé dans un trou, traversant le support de garniture (2) et la, garniture de frein (1) et dont l'axe (3) est orienté à peu près parallèlement à la direction d'actionnement (11) du frein, et qui est relié solidement au support de garniture,
- en ce qu'il est prévu dans le carter (4, 5) au moins une voie résistante (7) électriquement isolée, orientée parallèlement à l'axe (3) et dont les connexions électriques sortent du carter (4,5) à l'extrémité opposée au disque de frein ou au tambour de frein,
- en ce qu'il est prévu dans le fourreau de guidage (5) un poussoir (8) déplaçable axialement, se terminant par une de ses extrémités en coïncidence avec la surface de frottement de la garniture de frein et qui est relié par son autre extrémité à un ressort (9), qui relie les deux voies résistantes (7) électriquement l'une avec l'autre, en bloquant simultanément le poussoir (8) dans le carter (4,5) de telle sorte que celui-ci puisse pénétrer dans le carter (4,5) seulement lors d'une application de la garniture de frein (1) contre le disque de frein ou le tambour de frein par ce poussoir par suite d'une diminution d'épaisseur de la garniture de frein, en modifiant ainsi la valeur de résistance du rhéostat.
